# EUROPÄISCHE PATENTSCHRIFT

(11) **EP 2 177 857 B1**
(45) Veröffentlichungstag und Bekanntmachung des Hinweises auf die Patenterteilung: **13.04.2011**
(21) Anmeldenummer: 09015811.4
(22) Anmeldetag: 29.05.2006
(51) Int. Cl.: F28D 20/02, F28F 9/00

(54) **Kälte- und/oder Wärmespeicher**
Cold and/or heat accumulator
Accumulateur de froid et/ou de chaleur

(43) Veröffentlichungstag der Anmeldung: 21.04.2010
(62) Teilanmeldung aus: 06753206.9
(73) Patentinhaber: Webasto AG, 82131 Stockdorf (DE)
(72) Erfinder: Khelifa, Noureddine, 80637 München (DE); Krämer, Wolfgang, 81479 München (DE); Korfmann, Steffen, 85055 Ingolstadt (DE); Peters, Thomas, 80801 München (DE)
(74) Vertreter: Schumacher & Willsau

(56) Entgegenhaltungen:
- EP-A2- 0 601 379
- WO-A1-2007/025511
- DE-A1- 4 007 002
- DE-A1- 10 242 069
- DE-A1- 10 242 463
- DE-A1-102005 040 865
- US-A- 5 199 484

## Beschreibung

Die Erfindung betrifft einen Kälte- und/oder Wärmespeicher mit einem Gehäuse, in dem zumindest ein mit einem Kälte- beziehungsweise Wärmespeichermedium beladenes Trägerelement und zumindest ein erster Wärmetauscher angeordnet sind.

Die Erfindung betrifft außerdem einen Kälte- und/oder Wärmespeicher mit einer Mehrzahl von mit einem Kälte- beziehungsweise Wärmespeichermedium beladenen Trägerelementen und mit zumindest einem ersten Wärmetauscher, der dazu vorgesehen ist, von einem ersten Wärmeträger durchströmt zu werden, und der zumindest ein erstes serpentinenförmiges Hohlprofil aufweist, wobei zumindest zwischen einigen der weils durch zwei benachbarte erste Schenkel und einen ersten Verbindungsbereich gebildeten ersten Serpentinen zumindest ein Trägerelement angeordnet ist.

Die Erfindung betrifft weiterhin einen Kälte- und/oder Wärmespeicher mit einer Mehrzahl von mit einem Kälte- beziehungsweise Wärmespeichermedium beladenen Trägerelementen und mit zumindest einem ersten Wärmetauscher, der dazu vorgesehen ist, von einem ersten Wärmeträger durchströmt zu werden, und der zumindest zwei nebeneinander angeordnete erste serpentinenförmige Hohlprofile aufweist, von denen jeweils ein Endabschnitt mit einem ersten gemeinsamen Wärmeträgereinlass und der jeweils andere Endabschnitt mit einem ersten gemeinsamen Wärmeträgerauslass in Verbindung steht.

Darüber hinaus betrifft die Erfindung einen Kälte- und/oder Wärmespeicher mit einer Mehrzahl von mit einem Kälte- beziehungsweise Wärmespeichermedium beladenen Trägerelementen und mit zumindest einem ersten Wärmetauscher, der dazu vorgesehen ist, von einem ersten Wärmeträger durchströmt zu werden, und der zumindest ein erstes serpentinenförmiges Hohlprofil aufweist, von dem ein Endabschnitt mit einem ersten Wärmeträgereinlass und der andere Endabschnitt mit einem ersten Wärmeträgerauslass in Verbindung steht.

Die Erfindung betrifft auch einen Kälte- und/oder Wärmespeicher mit einer Mehrzahl von mit einem Kälte- beziehungsweise Wärmespeichermedium beladenen Trägerelementen, mit zumindest einem ersten Wärmetauscher, der dazu vorgesehen ist, von einem ersten Kältemittel durchströmt zu werden, und mit einem zweiten Wärmetauscher, der dazu vorgesehen ist, von einem zweiten Wärmeträger durchströmt zu werden.

### Hintergrund der Erfindung

Kälte- und/oder Wärmespeicher der oben genannten Art sind aus der DE 102 42 069 B4 bekannt, deren Offenbarungsgehalt durch diese Bezugnahme hier aufgenommen wird. Derartige Kälte- und/oder Wärmespeicher können beispielsweise im Zusammenhang mit der Klimatisierung von Kraftfahrzeugen verwendet werden, insbesondere zur Standklimatisierung.

Der Erfindung liegt die Aufgabe zugrunde, den aus der DE 102 42 069 B4 bekannten Kälte- und/oder Wärmespeicher derart weiterzuentwickeln, dass sich bessere Eigenschaften hinsichtlich der Stabilität des Kälte- und/oder Wärmespeichers, insbesondere bei Vibrationen ergeben.

### Zusammenfassung der Erfindung

Die Erfindung betrifft einen Kälte- und/oder Wärmespeicher gemäß Anspruch 1. Bevorzugte Ausführungsformen ergeben sich aus den abhängigen Ansprüchen.

Die vorliegende Erfindung ergibt einen Kälte- und/oder Wärmespeicher mit einem Gehäuse, in dem zumindest ein mit einem Kälte- beziehungsweise Wärmespeichermedium beladenes Trägerelement und zumindest ein erster Wärmetauscher angeordnet sind, wobei erfindungsgemäß vorgesehen ist, dass das zumindest eine Trägerelement und der zumindest eine Wärmetauscher auf einer ebenfalls in dem Gehäuse vorgesehenen Trägerplatte angeordnet sind, die sich aus dem Gehäuse heraus erstreckende Befestigungseinrichtungen aufweist. Die sich aus dem Gehäuse heraus erstreckenden Befestigungselemente, beispielsweise Schrauben oder Gewindestifte, gewährleisten auch in diesem Fall, dass der Verbund aus Wärmetauscher(n) und Trägerelementen direkt am Bestimmungsort, beispielsweise im Fahrzeug, befestigt werden kann. Würde die Befestigung nur mittelbar über das Gehäuse erfolgen, könnten beispielsweise Vibrationen dazu führen, dass der Verbund aus Wärmetauscher(n) und Trägerelementen innerhalb des Gehäuses schwingt, was beispielsweise zu störenden Geräuschen oder sich lösenden Verbindungen führen könnte.

Im Rahmen der Erfindung wird bevorzugt, dass die Trägerplatte beabstandet vom Gehäuse angeordnet ist. Bei der Trägerplatte kann es sich zur Gewichtseinsparung in vorteilhafter Weise um eine Lochplatte handeln. Weiterhin können die sich aus dem Gehäuse heraus erstreckenden Befestigungselemente gleichzeitig als Abstandhalter (mit)wirken. Beispielsweise können die Befestigungsmittel durch Schrauben gebildet sein, deren Lage hinsichtlich des Gehäuses durch Kontermuttern festgelegt ist.

Eine weitere im Zusammenhang mit der Erfindung bevorzugte Weiterbildung des Kälte- und/oder Wärmespeichers sieht vor, dass zumindest einige Zwischenräume zwichen dem Gehäuse und darin angeordneten Komponenten ausgeschäumt sind. Das aufgeschäumte Material trägt dabei sowohl zur Wärmeisolierung als auch zur Geräuschdämpfung bei. Vorzugsweise sind alle Hohlräume ausgeschäumt, auch der Bereich zwischen der Trägerplatte und dem gegenüberliegendem Gehäuseboden.

Eine im Rahmen der Erfindung bevorzugte Weiterbildung des Kälte- und/oder Wärmespeichers sieht vor, dass der erste Wärmetauscher dazu vorgesehen ist, von einem ersten Wärmeträger durchströmt zu werden, dass der erste Wärmetauscher zumindest ein erstes serpentinenförmiges Hohlprofil aufweist, wobei zumindest zwischen einigen der jeweils durch zwei benachbarte erste Schenkel und einen ersten Verbindungsbereich gebildeten ersten Serpentinen zumindest ein Trägerelement angeordnet ist, und dass die Trägerelemente durch eine Vielzahl von Trägerelementstreifen gebildet sind, die im Wesentlichen senkrecht zu den ersten Schenkeln ausgerichtet sind. Bei den Trägerelementen kann es sich auch in diesem Fall insbesondere um Graphitelemente handeln, wobei das Wärmespeichermedium vorzugsweise ein Phasenwechselmaterial wie beispielsweise Wasser oder Paraffin ist. Wenn als Trägerelementstreifen Graphitstreifen verwendet werden, lässt sich die Wärmeleitfähigkeit im Vergleich zur Verwendung von Graphitplatten beispielsweise von 5 W/mK auf 30 W/mK erhöhen. Eine bessere Wärmeleitfähigkeit führt zu deutlich kürzeren Ladezeiten des Kälte- und/oder Wärmespeichers und ist daher sehr vorteilhaft.

Hinsichtlich der Erfindung wird für den Kälte- und/oder Wärmespeicher bevorzugt, dass der erste Wärmetauscher dazu vorgesehen ist, von einem ersten Wärmeträger durchströmt zu werden, dass der erste Wärmetauscher zumindest zwei nebeneinander angeordnete erste serpentinenförmige Hohlprofile aufweist, von denen jeweils ein Endabschnitt mit einem ersten gemeinsamen Wärmeträgereinlass und der jeweils andere Endabschnitt mit einem ersten gemeinsamen Wärmeträgerauslass in Verbindung steht, und dass die Verbindung zwischen den einen Endabschnitten und dem ersten gemeinsamen Wärmeträgereinlass über im Wesentlichen gleich lange Verbindungsleitungen erfolgt. Beispielsweise wenn Kältemittel als erster Wärmeträger verwendet wird, kann durch diese Maßnahme im Rahmen der Erfindung sichergestellt werden, dass die zumindest zwei vorzugsweise jedoch mehreren ersten serpentinenförmigen Hohlprofile sowohl hinsichtlich der Menge als auch hinsichtlich des Drucks gleichmäßig mit Kältemittel beaufschlagt werden, so dass alle ersten Hohlprofile beispielsweise beim Beladen mit Kälte optimal genutzt werden können, was zu einer gleichmäßigen Kälteverteilung innerhalb des Kälte- und/oder Wärmespeichers führt.

Eine weitere im Zusammenhang mit der Erfindung vorteilhafte Weiterbildung des Kälte- und/oder Wärmespeichers sieht vor, dass der erste Wärmetauscher dazu vorgesehen ist, von einem ersten Wärmeträger durchströmt zu werden, dass der erste Wärmetauscher zumindest ein erstes serpentinenförmiges Hohlprofil aufweist, von dem ein Endabschnitt mit einem ersten Wärmeträgereinlass und der andere Endabschnitt mit einem ersten Wärmeträgerauslass in Verbindung steht, und dass der eine Endabschnitt des ersten serpentinenförmigen Hohlprofils bezogen auf die vorgesehene Einbaulage höher liegt als der andere Endabschnitt des ersten serpentinenförmigen Hohlprofils. Diese Lösung ist besonders vorteilhaft, wenn Kältemittel als erster Wärmeträger verwendet wird, weil eine Kältemittelströmung von oben nach unten dazu führt, dass eine Ölansammlung im ersten Wärmetauscher sicher vermieden werden kann.

Zumindest bei einigen Ausführungsformen kann es im Rahmen der Erfindung vorteilhaft für den Kälte- und/oder Wärmespeicher sein, dass er einen zweiten Wärmetauscher aufweist, der dazu vorgesehen ist, von einem zweiten Wärmeträger durchströmt zu werden, und dass die für den Wärmetausch wirksame Oberfläche des ersten Wärmetauschers kleiner als die für den Wärmetausch wirksame Oberfläche des zweiten Wärmetauschers ist. Beispielsweise wenn der erste Wärmetauscher durch mehrere nebeneinander angeordnete serpentinenförmige erste Hohlprofile und der zweite Wärmetauscher durch mehrere nebeneinander und vorzugsweise zwischen den ersten Hohlprofilen angeordnete zweite serpentinenförmige Hohlprofile gebildet ist, kann die Anzahl der ersten serpentinenförmigen Hohlprofile kleiner als die der zweiten serpentinenförmigen Hohlprofile sein. Jedenfalls besteht das Ziel dieser Maßnahme darin, die gespeicherte Kälte oder Wärme möglichst schnell an den Ort bringen zu können, an dem sie benötigt wird. Die wirksame Oberfläche des ersten Wärmetauschers wird aus Platzgründen möglichst klein aber doch so groß gewählt, dass beispielsweise eine effiziente und ausreichend schnelle Beladung über Kältemittel möglich ist.

Gemäß einer nicht beanspruchten Alternative ist ein Kälte- und/oder Wärmespeicher mit einer Mehrzahl von mit einem Kälte- beziehungsweise Wärmespeichermedium beladenen Trägerelementen und mit zumindest einem ersten Wärmetauscher vorstellbar, der dazu vorgesehen ist, von einem ersten Wärmeträger durchströmt zu werden, und der zumindest ein erstes serpentinenförmiges Hohlprofil aufweist, wobei zumindest zwischen einigen der jeweils durch zwei benachbarte erste Schenkel und einen ersten Verbindungsbereich gebildeten ersten Serpentinen zumindest ein Trägerelement angeordnet ist, wobei die Trägerelemente durch eine Vielzahl von Trägerelementstreifen gebildet sind, die im Wesentlichen senkrecht zu den ersten Schenkeln ausgerichtet sind. Bei den Trägerelementen kann es sich insbesondere um Graphitelemente handeln, wobei das Wärmespeichermedium vorzugsweise ein Phasenwechselmaterial wie beispielsweise Wasser oder Paraffin ist. Wenn als Trägerelementstreifen Graphitstreifen verwendet werden, lässt sich die Wärmeleitfähigkeit im Vergleich zur Verwendung von Graphitplatten beispielsweise von 5 W/mK auf 30 W/mK erhöhen. Eine bessere Wärmeleitfähigkeit führt zu deutlich kürzeren Ladezeiten des Kälte- und/oder Wärmespeichers und ist daher sehr vorteilhaft.

Im Zusammenhang mit dieser Alternative wird bevorzugt, dass die Trägerelementstreifen im Wesentlichen parallel zu den ersten Verbindungsbereichen ausgerichtet sind. Wenn das erste serpentinenförmige Hohlprofil federelastische Eigenschaften aufweist, kann in einfacher Weise ein kraftschlüssiger Verbund aus vorzugsweise mehreren ersten serpentinenförmigen Hohlprofilen und den Trägerelementstreifen gebildet werden, ähnlich wie dies in der DE 102 42 069 B4 für plattenförmige Trägerelemente beschrieben ist.

Weiterhin wird es im Zusammenhang mit dieser Alternative als vorteilhaft für den Kälte- und/oder Wärmespeicher erachtet, dass er einen zweiten Wärmetauscher aufweist, der dazu vorgesehen ist, von einem zweiten Wärmeträger durchströmt zu werden, und der zumindest ein zweites serpentinenförmiges Hohlprofil aufweist, wobei die Trägerelementstreifen weiterhin zumindest zwischen einigen der jeweils durch zwei benachbarte zweite Schenkel und einen zweiten Verbindungsbereich gebildeten zweiten Serpentinen angeordnet sind. Obwohl grundsätzlich auch Lösungen möglich sind, bei denen nur ein Wärmetauscher vorgesehen ist, über den der Kälte- und/oder Wärmespeicher sowohl be- als auch entladen wird, ist die Verwendung von separaten Wärmetauschern zum be- und entladen aus mehreren Gründen vorteilhaft. In der überwiegenden Mehrzahl aller Fälle ist ohnehin ein Kompressionskältekreis vorhanden, so dass es vorteilhaft ist, den Kälte- und/oder Wärmespeicher mittels Expansion von komprimiertem Kältemittel mit Kälte zu laden. Der erste Wärmetauscher kann daher in vorteilhafter Weise die Funktion eines Verdampfers übernehmen, wobei gegebenenfalls ein oder mehrere Expansionsventile vorhanden sein können, wenn der erste Wärmeträger Kältemittel ist. Beispielsweise bei Kraftfahrzeugen ist üblicherweise weiterhin ein Solekreis vorhanden, der Bestandteil des Kühl- und Heizsystems ist. Wenn als zweiter Wärmeträger Sole verwendet wird und der zweite Wärmetauscher in geeigneter Weise an das Kühl- beziehungsweise Heizsystem angekoppelt werden kann, ist es beispielsweise möglich den Kälte- und/oder Wärmespeicher über das Heizsystem zu entladen. Dies gilt sowohl für den Fall dass Kälte in dem Kälte- und/oder Wärmespeicher gespeichert ist, als auch für den Fall, dass Wärme gespeichert ist. Eine Beladung des Kälte- und/oder Wärmespeichers mit Wärme kann ebenfalls über das Heizsystem erfolgen.

Eine weitere im Rahmen dieser Alternative liegende Ausgestaltung besteht darin, dass die für den Wärmetausch wirksame Oberfläche des ersten Wärmetauschers kleiner als die für den Wärmetausch wirksame Oberfläche des zweiten Wärmetauschers ist. Beispielsweise wenn der erste Wärmetauscher durch mehrere nebeneinander angeordnete serpentinenförmige erste Hohlprofile und der zweite Wärmetauscher durch mehrere nebeneinander und vorzugsweise zwischen den ersten Hohlprofilen angeordnete zweite serpentinenförmige Hohlprofile gebildet ist, kann die Anzahl der ersten serpentinenförmigen Hohlprofile kleiner als die der zweiten serpentinenförmigen Hohlprofile sein. Jedenfalls besteht das Ziel dieser Maßnahme darin, die gespeicherte Kälte oder Wärme möglichst schnell an den Ort bringen zu können, an dem sie benötigt wird. Die wirksame Oberfläche des ersten Wärmetauschers wird aus Platzgründen möglichst klein aber doch so groß gewählt, dass beispielsweise eine effiziente und ausreichend schnelle Beladung über Kältemittel möglich ist.

Eine weitere im Rahmen dieser Alternative bevorzugte Weiterbildung sieht vor, dass der erste Wärmetauscher zumindest zwei nebeneinander angeordnete erste serpentinenförmige Hohlprofile aufweist, von denen jeweils ein Endabschnitt mit einem ersten gemeinsamen Wärmeträgereinlass und der jeweils andere Endabschnitt mit einem ersten gemeinsamen Wärmeträgerauslass in Verbindung steht, und dass die Verbindung zwischen den einen Endabschnitten und dem ersten gemeinsamen Wärmeträgereinlass über im Wesentlichen gleich lange Verbindungsleitungen erfolgt. Beispielsweise wenn Kältemittel als erster Wärmeträger verwendet wird, kann durch diese Maßnahme sichergestellt werden, dass die zumindest zwei vorzugsweise jedoch mehreren ersten serpentinenförmigen Hohlprofile sowohl hinsichtlich der Menge als auch hinsichtlich des Drucks gleichmäßig mit Kältemittel beaufschlagt werden, so dass alle ersten Hohlprofile beispielsweise beim Beladen mit Kälte optimal genutzt werden können, was zu einer gleichmäßigen Kälteverteilung innerhalb des Kälte- und/oder Wärmespeichers führt.

Gemäß einer weiteren Ausgestaltung des Kälte- und/oder Wärmespeichers kann im Rahmen dieser Alternative vorgesehen sein, dass ein Endabschnitt des ersten serpentinenförmigen Hohlprofils mit einem ersten Wärmeträgereinlass und der andere Endabschnitt des ersten serpentinenförmigen Hohlprofils mit einem ersten Wärmeträgerauslass in Verbindung steht und dass der eine Endabschnitt des ersten serpentinenförmigen Hohlprofils bezogen auf die vorgesehene Einbaulage höher liegt als der andere Endabschnitt des ersten serpentinenförmigen Hohlprofils. Diese Lösung ist besonders vorteilhaft, wenn Kältemittel als erster Wärmeträger verwendet wird, weil eine Kältemittelströmung von oben nach unten dazu führt, dass eine Ölansammlung im ersten Wärmetauscher sicher vermieden werden kann.

Im Rahmen dieser Alternative wird es für den Kälte- und/oder Wärmespeicher weiterhin bevorzugt, dass er ein Gehäuse aufweist, in dem zumindest die Trägerelemente und der erste Wärmetauscher angeordnet sind, und dass die Trägerelemente und der erste Wärmetauscher auf einer ebenfalls in dem Gehäuse vorgesehenen Trägerplatte angeordnet sind, die sich aus dem Gehäuse heraus erstreckende Befestigungseinrichtungen aufweist. Hintergrund dieser Maßnahme ist, dass Hohlräume innerhalb des Gehäuses vorzugsweise derart mit einem isolierenden Schaum ausgeschäumt werden, dass der gesamte Verbund aus Wärmetauscher(n) und Trägerelementen vollständig von aufgeschäumtem Material umgeben ist. Um dies zu gewährleisten, wird die Trägerplatte mit einem entsprechenden Abstand zum Gehäuse angeordnet, beispielsweise mittels geeigneter Abstandselemente. Die sich aus dem Gehäuse heraus erstreckenden Befestigungselemente, beispielsweise Schrauben oder Gewindestifte, gewährleisten, dass der Verbund aus Wärmetauscher(n) und Trägerelementen direkt am Bestimmungsort, beispielsweise im Fahrzeug, befestigt werden kann. Würde die Befestigung nur mittelbar über das Gehäuse erfolgen, könnten beispielsweise Vibrationen dazu führen, dass der Verbund aus Wärmetauscher(n) und Trägerelementen innerhalb des Gehäuses schwingt, was beispielsweise zu störenden Geräuschen oder sich lösenden Verbindungen führen könnte.

Gemäß einer zweiten nicht beanspruchten Alternative ist ein Kälte- und/oder Wärmespeicher mit einer Mehrzahl von mit einem Kälte- beziehungsweise Wärmespeichermedium beladenen Trägerelementen und mit zumindest einem ersten Wärmetauscher vorstellbar, der dazu vorgesehen ist, von einem ersten Wärmeträger durchströmt zu werden, und der zumindest zwei nebeneinander angeordnete erste serpentinenförmige Hohlprofile aufweist, von denen jeweils ein Endabschnitt mit einem ersten gemeinsamen Wärmeträgereinlass und der jeweils andere Endabschnitt mit einem ersten gemeinsamen Wärmeträgerauslass in Verbindung steht, wobei vorgesehen ist, dass die Verbindung zwischen den einen Endabschnitten und dem ersten gemeinsamen Wärmeträgereinlass über im Wesentlichen gleich lange Verbindungsleitungen erfolgt. Beispielsweise wenn Kältemittel als erster Wärmeträger verwendet wird, kann durch diese Maßnahme auch im Rahmen der zweiten Alternative sichergestellt werden, dass die zumindest zwei vorzugsweise jedoch mehreren ersten serpentinenförmigen Hohlprofile sowohl hinsichtlich der Menge als auch hinsichtlich des Drucks gleichmäßig mit Kältemittel beaufschlagt werden, so dass alle ersten Hohlprofile beispielsweise beim Beladen mit Kälte optimal genutzt werden können, was zu einer gleichmäßigen Kälteverteilung innerhalb des Kälte- und/oder Wärmespeichers führt.

Im Zusammenhang mit der zweiten Alternative wird dabei für den Kälte- und/oder Wärmespeicher bevorzugt, dass er im Wesentlichen quaderförmig ist und dass der erste gemeinsame Wärmeträgereinlass im Bereich einer Kante des Quaders angeordnet ist. Die Anordnung des ersten gemeinsamen Wärmetragereinlasses im Bereich einer Quaderkante führt zu einer besonders guten Zugänglichkeit dieses Wärmeträgereinlasses, bedingt aber andererseits unterschiedliche Strecken zwischen dem ersten gemeinsamen Wärmeträgereinlass und einen Endabschnitten der ersten serpentinenförmigen Hohlprofile. Diese unterschiedlichen Strecken wirken sich jedoch nicht nachteilig aus, wenn die Verbindungsleitungen dennoch die gleiche Länge aufweisen.

Hinsichtlich der zweiten Alternative wird besonders bevorzugt, dass die Verbindungsleitungen durch einen gemeinsamen Verbindungsleitungsabschnitt, einen Verteiler und Einzelverbindungsleitungen bestehen. Dabei sind vorzugsweise die Einzelverbindungsleitungen bei gleicher Länge unterschiedlich gebogen, um die unterschiedlichen Strecken zwischen dem ersten gemeinsamen Wärmeträgereinlass und den einen Endabschnitten der erste serpentinenförmigen Hohlprofile auszugleichen.

Im Zusammenhang mit der zweiten Alternative wird es weiterhin als vorteilhaft erachtet, dass der Verteiler ein Venturiverteiler ist. Der Venturiverteiler verbindet vorzugsweise den gemeinsamen Verbindungsleitungsabschnitt mit den Einzelverbindungsleitungen, wobei der Venturiverteiler eine Drossel in Form einer Engstelle aufweisen kann, so dass sowohl der vor der Drossel befindliche Querschnitt des gemeinsamen Verbindungsleitungsabschnittes als auch die Summe der Querschnitte der Einzelverbindungsleitungen größer als der Querschnitt der Engstelle sind. Auf diese Weise ergibt sich eine besonders gleichmäßige Verteilung des ersten, beispielsweise durch Kältemittel gebildeten Wärmeträgers auf die Einzelverbindungsleitungen und damit auf die ersten serpentinenförmigen Hohlprofile.

Gemäß einer weiteren im Rahmen der zweiten Alternative vorgesehenen Weiterbildung ist vorgesehen, dass der gemeinsame Verbindungsleitungsabschnitt bezogen auf die vorgesehene Einbaulage im Wesentlichen vertikal verläuft. Insbesondere wenn sich ein Venturiverteiler an den gemeinsamen Verbindungsleitungsabschnitt anschließt, führt diese Lösung dazu, dass dem Venturiverteiler ein gerader gemeinsamer Verbindungsleitungsabschnitt vorangeht, was sich positiv auf eine gleichmäßige Verteilung des ersten Wärmeträgers auswirkt.

Wie bereits erwähnt, wird auch im Rahmen der zweiten Alternative bevorzugt, dass der erste Wärmeträger ein Kältemittel ist.

Hinsichtlich der zweiten Alternative wird für den Kälte- und/oder Wärmespeicher weiterhin bevorzugt, dass er einen zweiten Wärmetauscher aufweist, der dazu vorgesehen ist, von einem zweiten Wärmeträger durchströmt zu werden, und der zumindest zwei nebeneinander angeordnete zweite serpentinenförmige Hohlprofile aufweist, von denen jeweils ein Endabschnitt mit einem zweiten gemeinsamen Wärmeträgereinlass und der jeweils andere Endabschnitt mit einem zweiten gemeinsamen Wärmeträgerauslass in Verbindung steht. Obwohl, wie erwähnt, grundsätzlich auch Lösungen möglich sind, bei denen nur ein Wärmetauscher vorgesehen ist, über den der Kälte- und/oder Wärmespeicher sowohl beals auch entladen wird, ist die Verwendung von separaten Wärmetauschern zum be- und entladen aus mehreren Gründen vorteilhaft. In der überwiegenden Mehrzahl aller Fälle ist ohnehin ein Kompressionskältekreis vorhanden, so dass es vorteilhaft ist, den Kälte- und/oder Wärmespeicher mittels Expansion von komprimiertem Kältemittel mit Kälte zu laden. Der erste Wärmetauscher kann daher in vorteilhafter Weise die Funktion eines Verdampfers übernehmen, wobei gegebenenfalls ein oder mehrere Expansionsventile vorhanden sein können, wenn der erste Wärmeträger Kältemittel ist. Beispielsweise bei Kraftfahrzeugen ist üblicherweise weiterhin ein Solekreis vorhanden, der Bestandteil des Kühl- und Heizsystems ist. Wenn als zweiter Wärmeträger Sole verwendet wird und der zweite Wärmetauscher in geeigneter Weise an das Kühl- beziehungsweise Heizsystem angekoppelt werden kann, ist es beispielsweise möglich den Kälte- und/oder Wärmespeicher über das Heizsystem zu entladen. Dies gilt sowohl für den Fall, dass Kälte in dem Kälte- und/oder Wärmespeicher gespeichert ist, als auch für den Fall, dass Wärme gespeichert ist. Eine Beladung des Kälte- und/oder Wärmespeichers mit Wärme kann ebenfalls über das Heizsystem erfolgen.

Im vorstehend erläuterten Zusammenhang kann es weiterhin vorteilhaft sein, dass die für den Wärmetausch wirksame Oberfläche des ersten Wärmetauschers kleiner als die für den Wärmetausch wirksame Oberfläche des zweiten Wärmetauschers ist. Wenn der erste Wärmetauscher durch mehrere nebeneinander angeordnete serpentinenförmige erste Hohlprofile und der zweite Wärmetauscher durch mehrere nebeneinander und vorzugsweise zwischen den ersten Hohlprofilen angeordnete zweite serpentinenförmige Hohlprofile gebildet ist, kann die Anzahl der ersten serpentinenförmigen Hohlprofile auch in diesem Fall kleiner als die der zweiten serpentinenförmigen Hohlprofile sein. Auch hier besteht das Ziel dieser Maßnahme darin, die gespeicherte Kälte oder Wärme möglichst schnell an den Ort bringen zu können, an dem sie benötigt wird. Die wirksame Oberfläche des ersten Wärmetauschers wird aus Platzgründen möglichst klein aber doch so groß gewählt, dass beispielsweise eine effiziente und ausreichend schnelle Beladung über Kältemittel möglich ist.

Auch im Rahmen der zweiten Alternative wird bevorzugt, dass der zweite Wärmeträger Sole ist. Auf diese Weise ist beispielsweise die Ankopplung an den Heizkreislauf eines Kraftfahrzeuges besonders einfach möglich.

Gemäß einer weiteren auch im Zusammenhang mit der zweiten Alternative bevorzugten Weiterbildung ist vorgesehen, dass zumindest zwischen einigen der jeweils durch zwei benachbarte erste Schenkel und einen ersten Verbindungsbereich gebildeten ersten Serpentinen zumindest ein Trägerelement angeordnet ist und dass die Trägerelemente durch eine Vielzahl von Trägerelementstreifen gebildet sind, die im Wesentlichen senkrecht zu den ersten Schenkeln ausgerichtet sind. Bei den Trägerelementen kann es sich auch in diesem Fall insbesondere um Graphitelemente handeln, wobei das Wärmespeichermedium vorzugsweise ein Phasenwechselmaterial wie beispielsweise Wasser oder Paraffin ist. Wenn als Trägerelementstreifen Graphitstreifen verwendet werden, lässt sich die Wärmeleitfähigkeit im Vergleich zur Verwendung von Graphitplatten beispielsweise von 5 W/mK auf 30 W/mK erhöhen. Eine bessere Wärmeleitfähigkeit führt zu deutlich kürzeren Ladezeiten des Kälte- und/oder Wärmespeichers und ist daher sehr vorteilhaft.

Auch im Rahmen der zweiten Alternative wird bevorzugt, dass jeweils ein Endabschnitt der ersten serpentinenförmigen Hohlprofile mit einem ersten gemeinsamen Wärmeträgereinlass in Verbindung steht, dass jeweils ein anderer Endabschnitt der ersten serpentinenförmigen Hohlprofile mit einem ersten gemeinsamen Wärmeträgerauslass in Verbindung steht und dass die einen Endabschnitte der ersten serpentinenförmigen Hohlprofile bezogen auf die vorgesehene Einbaulage höher liegen als die anderen Endabschnitte der ersten serpentinenförmigen Hohlprofile. Wie erwähnt, ist diese Lösung besonders vorteilhaft, wenn Kältemittel als erster Wärmeträger verwendet wird, weil eine Kältemittelströmung von oben nach unten dazu führt, dass eine Ölansammlung im ersten Wärmetauscher sicher vermieden werden kann.

Gemäß einer auch im Zusammenhang mit der zweiten Alternative bevorzugten Variante des Kälte- und/oder Wärmespeichers ist vorgesehen, dass er ein Gehäuse aufweist, in dem zumindest die Trägerelemente und der erste Wärmetauscher angeordnet sind, und dass die Trägerelemente und der erste Wärmetauscher auf einer ebenfalls in dem Gehäuse vorgesehenen Trägerplatte angeordnet sind, die sich aus dem Gehäuse heraus erstreckende Befestigungseinrichtungen aufweist. Hintergrund dieser Maßnahme ist auch hier, dass Hohlräume innerhalb des Gehäuses vorzugsweise derart mit einem isolierenden Schaum ausgeschäumt werden, dass der gesamte Verbund aus Wärmetauscher(n) und Trägerelementen vollständig von aufgeschäumtem Material umgeben ist. Um dies zu gewährleisten, wird die Trägerplatte mit einem entsprechenden Abstand zum Gehäuse angeordnet, beispielsweise mittels geeigneter Abstandselemente. Die sich aus dem Gehäuse heraus erstreckenden Befestigungselemente, beispielsweise Schrauben oder Gewindestifte, gewährleisten, dass der Verbund aus Wärmetauscher(n) und Trägerelementen direkt am Bestimmungsort, beispielsweise im Fahrzeug, befestigt werden kann. Würde die Befestigung nur mittelbar über das Gehäuse erfolgen, könnten beispielsweise Vibrationen dazu führen, dass der Verbund aus Wärmetauscher(n) und Trägerelementen innerhalb des Gehäuses schwingt, was beispielsweise zu störenden Geräuschen oder sich lösenden Verbindungen führen könnte.

Gemäß einer dritten nicht beanspruchten Alternative ist ein Kälte- und/oder Wärmespeicher mit einer Mehrzahl von mit einem Kälte- beziehungsweise Wärmespeichermedium beladenen Trägerelementen und mit zumindest einem ersten Wärmetauscher vorstellbar, der dazu vorgesehen ist, von einem ersten Wärmeträger durchströmt zu werden, und der zumindest ein erstes serpentinenförmiges Hohlprofil aufweist, von dem ein Endabschnitt mit einem ersten Wärmeträgereinlass und der andere Endabschnitt mit einem ersten Wärmeträgerauslass in Verbindung steht, wobei vorgesehen ist, dass der eine Endabschnitt des ersten serpentinenförmigen Hohlprofils bezogen auf die vorgesehene Einbaulage höher liegt als der andere Endabschnitt des ersten serpentinenförmigen Hohlprofils. Beispielsweise wenn Kältemittel als erster Wärmeträger verwendet wird, weil eine Kältemittelströmung von oben nach unten dazu führt, dass eine Ölansammlung im ersten Wärmetauscher sicher vermieden werden kann.

Im Rahmen der dritten Alternative wird folglich bevorzugt, dass der erste Wärmeträger ein Kältemittel ist. Dadurch lässt sich der Kälte- und/oder Wärmespeicher besonders einfach in einen eventuell ohnehin vorhandenen Kompressionskältekreis einbinden.

Auch im Rahmen der dritten Alternative wird es als vorteilhaft für den Kälte- und/oder Wärmespeicher erachtet, dass er einen zweiten Wärmetauscher aufweist, der dazu vorgesehen ist, von einem zweiten Wärmeträger durchströmt zu werden, und der zumindest ein zweites serpentinenförmiges Hohlprofil aufweist, von dem ein Endabschnitt mit einem zweiten Wärmeträgereinlass und der andere Endabschnitt mit einem zweiten Wärmeträgerauslass in Verbindung steht. Obwohl, wie erwähnt, grundsätzlich auch Lösungen möglich sind, bei denen nur ein Wärmetauscher vorgesehen ist, über den der Kälte- und/oder Wärmespeicher sowohl be- als auch entladen wird, ist die Verwendung von separaten Wärmetauschern zum be- und entladen aus mehreren Gründen vorteilhaft. In der überwiegenden Mehrzahl aller Fälle ist ohnehin ein Kompressionskältekreis vorhanden, so dass es vorteilhaft ist, den Kälte- und/oder Wärmespeicher mittels Expansion von komprimiertem Kältemittel mit Kälte zu laden. Der erste Wärmetauscher kann daher in vorteilhafter Weise die Funktion eines Verdampfers übernehmen, wobei gegebenenfalls ein oder mehrere Expansionsventile vorhanden sein können, wenn der erste Wärmeträger Kältemittel ist. Beispielsweise bei Kraftfahrzeugen ist üblicherweise weiterhin ein Solekreis vorhanden, der Bestandteil des Kühl- und Heizsystems ist. Wenn als zweiter Wärmeträger Sole verwendet wird und der zweite Wärmetauscher in geeigneter Weise an das Kühlbeziehungsweise Heizsystem angekoppelt werden kann, ist es beispielsweise möglich den Kälte- und/oder Wärmespeicher über das Heizsystem zu entladen. Dies gilt sowohl für den Fall dass Kälte in dem Kälte- und/oder Wärmespeicher gespeichert ist, als auch für den Fall, dass Wärme gespeichert ist. Eine Beladung des Kälte- und/oder Wärmespeichers mit Wärme kann ebenfalls über das Heizsystem erfolgen.

Eine auch im Rahmen der dritten Alternative vorteilhafte Weiterbildung des Kälte- und/oder Wärmespeichers sieht vor, dass der eine Endabschnitt des zweiten serpentinenförmigen Hohlprofils bezogen auf die vorgesehen Einbaulage tiefer liegt als der andere Endabschnitt des zweiten serpentinenförmigen Hohlprofils. Wie erwähnt, ist diese Lösung besonders vorteilhaft, wenn Kältemittel als erster Wärmeträger verwendet wird, weil eine Kältemittelströmung von oben nach unten dazu führt, dass eine Ölansammlung im ersten Wärmetauscher sicher vermieden werden kann.

Im vorstehend erläuterten Zusammenhang wird es als vorteilhaft erachtet, dass der zweite Wärmeträger Sole ist. Auf diese Weise ist, wie erwähnt, beispielsweise die Ankopplung an den Heizkreislauf eines Kraftfahrzeuges besonders einfach möglich.

Gemäß einer auch im Rahmen der dritten Alternative vorteilhaften Ausgestaltung des Kälte- und/oder Wärmespeichers ist vorgesehen, dass die für den Wärmetausch wirksame Oberfläche des ersten Wärmetauschers kleiner als die für den Wärmetausch wirksame Oberfläche des zweiten Wärmetauschers ist. Wenn der erste Wärmetauscher durch mehrere nebeneinander angeordnete serpentinenförmige erste Hohlprofile und der zweite Wärmetauscher durch mehrere nebeneinander und vorzugsweise zwischen den ersten Hohlprofilen angeordnete zweite serpentinenförmige Hohlprofile gebildet ist, kann die Anzahl der ersten serpentinenförmigen Hohlprofile auch in diesem Fall kleiner als die der zweiten serpentinenförmigen Hohlprofile sein. Auch hier besteht das Ziel dieser Maßnahme darin, die gespeicherte Kälte oder Wärme möglichst schnell an den Ort bringen zu können, an dem sie benötigt wird. Die wirksame Oberfläche des ersten Wärmetauschers wird aus Platzgründen möglichst klein aber doch so groß gewählt, dass beispielsweise eine effiziente und ausreichend schnelle Beladung über Kältemittel möglich ist.

Bei bevorzugten Ausführungsformen des Kälte- und/oder Wärmespeichers ist auch im Zusammenhang mit der dritten Alternative vorgesehen, dass zumindest zwischen einigen der jeweils durch zwei benachbarte erste Schenkel und einen ersten Verbindungsbereich gebildeten ersten Serpentinen des ersten Wärmetauschers zumindest ein Trägerelement angeordnet ist und dass die Trägerelemente durch eine Vielzahl von Trägerelementstreifen gebildet sind, die im Wesentlichen senkrecht zu den ersten Schenkeln ausgerichtet sind. Bei den Trägerelementen kann es sich auch in diesem Fall insbesondere um Graphitelemente handeln, wobei das Wärmespeichermedium vorzugsweise ein Phasenwechselmaterial wie beispielsweise Wasser oder Paraffin ist. Wenn als Trägerelementstreifen Graphitstreifen verwendet werden, lässt sich die Wärmeleitfähigkeit im Vergleich zur Verwendung von Graphitplatten beispielsweise von 5 W/mK auf 30 W/mK erhöhen. Eine bessere Wärmeleitfähigkeit führt zu deutlich kürzeren Ladezeiten des Kälte- und/oder Wärmespeichers und ist daher sehr vorteilhaft.

Auch im Rahmen der dritten Alternative wird bevorzugt, dass der erste Wärmetauscher zumindest zwei nebeneinander angeordnete erste serpentinenförmige Hohlprofile aufweist, von denen jeweils ein Endabschnitt mit einem ersten gemeinsamen Wärmeträgereinlass und der jeweils andere Endabschnitt mit einem ersten gemeinsamen Wärmeträgerauslass in Verbindung steht, und dass die Verbindung zwischen den einen Endabschnitten und dem ersten gemeinsamen Wärmeträgereinlass über im Wesentlichen gleich lange Verbindungsleitungen erfolgt. Beispielsweise wenn Kältemittel als erster Wärmeträger verwendet wird, kann durch diese Maßnahme auch im Rahmen der dritten Alternative sichergestellt werden, dass die zumindest zwei vorzugsweise jedoch mehreren ersten serpentinenförmigen Hohlprofile sowohl hinsichtlich der Menge als auch hinsichtlich des Drucks gleichmäßig mit Kältemittel beaufschlagt werden, so dass alle ersten Hohlprofile beispielsweise beim Beladen mit Kälte optimal genutzt werden können, was zu einer gleichmäßigen Kälteverteilung innerhalb des Kälte- und/oder Wärmespeichers führt.

Hinsichtlich der dritten Alternative wird für den Kälte- und/oder Wärmespeicher erneut bevorzugt, dass er ein Gehäuse aufweist, in dem zumindest die Trägerelemente und der erste Wärmetauscher angeordnet sind, und dass die Trägerelemente und der erste Wärmetauscher auf einer ebenfalls in dem Gehäuse vorgesehenen Trägerplatte angeordnet sind, die sich aus dem Gehäuse heraus erstreckende Befestigungseinrichtungen aufweist. Hintergrund dieser Maßnahme ist auch im Zusammenhang mit der dritten Alternative, dass Hohlräume innerhalb des Gehäuses vorzugsweise derart mit einem isolierenden Schaum ausgeschäumt werden, dass der gesamte Verbund aus Wärmetauscher(n) und Trägerelementen vollständig von aufgeschäumtem Material umgeben ist. Um dies zu gewährleisten, wird die Trägerplatte mit einem entsprechenden Abstand zum Gehäuse angeordnet, beispielsweise mittels geeigneter Abstandselemente. Die sich aus dem Gehäuse heraus erstreckenden Befestigungselemente, beispielsweise Schrauben oder Gewindestifte, gewährleisten, dass der Verbund aus Wärmetauscher(n) und Trägerelementen direkt am Bestimmungsort, beispielsweise im Fahrzeug, befestigt werden kann. Würde die Befestigung nur mittelbar über das Gehäuse erfolgen, könnten beispielsweise Vibrationen dazu führen, dass der Verbund aus Wärmetauscher(n) und Trägerelementen innerhalb des Gehäuses schwingt, was beispielsweise zu störenden Geräuschen oder sich lösenden Verbindungen führen könnte.

Gemäß einer vierten nicht beanspruchten Alternative ist ein Kälte- und/oder Wärmespeicher mit einer Mehrzahl von mit einem Kälte- beziehungsweise Wärmespeichermedium beladenen Trägerelementen vorstellbar, mit zumindest einem ersten Wärmetauscher, der dazu vorgesehen ist, von einem ersten Kältemittel durchströmt zu werden, und mit einem zweiten Wärmetauscher, der dazu vorgesehen ist, von einem zweiten Wärmeträger durchströmt zu werden, wobei vorgesehen ist, dass die für den Wärmetausch wirksame Oberfläche des ersten Wärmetauschers kleiner als die für den Wärmetausch wirksame Oberfläche des zweiten Wärmetauschers ist. Das Ziel dieser Maßnahme besteht darin, die gespeicherte Kälte oder Wärme möglichst schnell an den Ort bringen zu können, an dem sie benötigt wird. Die wirksame Oberfläche des ersten Wärmetauschers wird aus Platzgründen möglichst klein aber doch so groß gewählt, dass beispielsweise eine effiziente und ausreichend schnelle Beladung über Kältemittel möglich ist.

Auch im Rahmen der vierten Alternative wird bevorzugt, dass der erste Wärmetauscher zumindest ein erstes serpentinenförmiges Hohlprofil aufweist, wobei zumindest zwischen einigen der jeweils durch zwei benachbarte erste Schenkel und einen ersten Verbindungsbereich gebildeten ersten Serpentinen zumindest ein Trägerelement angeordnet ist. Wenn das erste serpentinenförmige Hohlprofil federelastische Eigenschaften aufweist, kann auf diese Weise ein kraftschlüssiger Verbund aus dem ersten Wärmetauscher und den Trägerelementen geschaffen werden, wie dies in der DE 102 42 069 B4 erläutert ist.

Im vorstehend erläuterten Zusammenhang wird es weiterhin als vorteilhaft erachtet, dass der zweite Wärmetauscher zumindest ein zweites serpentinenförmiges Hohlprofil aufweist, wobei zumindest zwischen einigen der jeweils durch zwei benachbarte zweite Schenkel und einen zweiten Verbindungsbereich gebildeten zweiten Serpentinen zumindest ein Trägerelement angeordnet ist. Wenn auch das zweite serpentinenförmige Hohlprofil federelastische Eigenschaften aufweist, kann der zweite Wärmetauscher in einfacher Weise in den Verbund aus dem ersten Wärmetauscher und den Trägerelementen integriert werden.

Eine im Rahmen der vierten Alternative vorteilhafte Weiterbildung des Kälte- und/oder Wärmespeichers sieht vor, dass weniger erste serpentinenförmige Hohlprofile als zweite serpentinenförmige Hohlprofile vorgesehen sind. Diese Maßnahme ermöglicht es in einfacher Weise, die für den Wärmetausch wirksame Oberfläche des ersten Wärmetauschers kleiner als die für den Wärmetausch wirksame Oberfläche des zweiten Wärmetauschers auszugestalten.

Auch im Zusammenhang mit der vierten Alternative wird bevorzugt, dass zumindest zwischen einigen der jeweils durch zwei benachbarte erste Schenkel und einen ersten Verbindungsbereich gebildeten ersten Serpentinen des ersten Wärmetauschers zumindest ein Trägerelement angeordnet ist, und dass die Trägerelemente durch eine Vielzahl von Trägerelementstreifen gebildet sind, die im Wesentlichen senkrecht zu den ersten Schenkeln ausgerichtet sind. Bei den Trägerelementen kann es sich insbesondere wieder um Graphitelemente handeln, wobei das Wärmespeichermedium vorzugsweise ein Phasenwechselmaterial wie beispielsweise Wasser oder Paraffin ist. Wenn als Trägerelementstreifen Graphitstreifen verwendet werden, lässt sich die Wärmeleitfähigkeit im Vergleich zur Verwendung von Graphitplatten beispielsweise von 5 W/mK auf 30 W/mK erhöhen. Eine bessere Wärmeleitfähigkeit führt zu deutlich kürzeren Ladezeiten des Kälte- und/oder Wärmespeichers und ist daher sehr vorteilhaft.

Eine auch hinsichtlich der vierten Alternative vorteilhafte Weiterbildung des Kälte- und/oder Wärmespeichers sieht vor, dass der erste Wärmetauscher zumindest zwei nebeneinander angeordnete erste serpentinenförmige Hohlprofile aufweist, von denen jeweils ein Endabschnitt mit einem ersten gemeinsamen Wärmeträgereinlass und der jeweils andere Endabschnitt mit einem ersten gemeinsamen Wärmeträgerauslass in Verbindung steht, und dass die Verbindung zwischen den einen Endabschnitten und dem ersten gemeinsamen Wärmeträgereinlass über im Wesentlichen gleich lange Verbindungsleitungen erfolgt. Insbesondere wenn Kältemittel als erster Wärmeträger verwendet wird, kann durch diese Maßnahme auch im Rahmen der vierten Alternative sichergestellt werden, dass die zumindest zwei vorzugsweise jedoch mehreren ersten serpentinenförmigen Hohlprofile sowohl hinsichtlich der Menge als auch hinsichtlich des Drucks gleichmäßig mit Kältemittel beaufschlagt werden, so dass alle ersten Hohlprofile beispielsweise beim Beladen mit Kälte optimal genutzt werden können, was zu einer gleichmäßigen Kälteverteilung innerhalb des Kälte- und/oder Wärmespeichers führt.

Weiterhin wird es auch im Rahmen der vierten Alternative bevorzugt, dass der erste Wärmespeicher zumindest ein erstes serpentinenförmiges Hohlprofil aufweist, von dem ein Endabschnitt mit einem ersten Wärmeträgereinlass und der andere Endabschnitt mit einem ersten Wärmeträgerauslass in Verbindung steht, und dass der eine Endabschnitt des ersten serpentinenförmigen Hohlprofils bezogen auf die vorgesehene Einbaulage höher liegt als der andere Endabschnitt des ersten serpentinenförmigen Hohlprofils. Diese Lösung ist besonders vorteilhaft, wenn Kältemittel als erster Wärmeträger verwendet wird, weil eine Kältemittelströmung von oben nach unten dazu führt, dass eine Ölansammlung im ersten Wärmetauscher sicher vermieden werden kann.

Für den Kälte- und/oder Wärmespeicher wird es auch im Zusammenhang mit der vierten Alternative als vorteilhaft erachtet, dass er ein Gehäuse aufweist, in dem zumindest die Trägerelemente, der erste Wärmetauscher und der zweite Wärmetauscher angeordnet sind, und dass die Trägerelemente, der erste Wärmetauscher und der zweite Wärmetauschen auf einer ebenfalls in dem Gehäuse vorgesehenen Trägerplatte angeordnet sind, die sich aus dem Gehäuse heraus erstreckende Befestigungseinrichtungen aufweist. Hintergrund dieser Maßnahme ist, dass Hohlräume innerhalb des Gehäuses vorzugsweise derart mit einem isolierenden Schaum ausgeschäumt werden, dass der gesamte Verbund aus Wärmetauscher(n) und Trägerelementen vollständig von aufgeschäumtem Material umgeben ist. Um dies zu gewährleisten, wird die Trägerplatte mit einem entsprechenden Abstand zum Gehäuse angeordnet, beispielsweise mittels geeigneter Abstandselemente. Die sich aus dem Gehäuse heraus erstreckenden Befestigungselemente, beispielsweise Schrauben oder Gewindestifte, gewährleisten, dass der Verbund aus Wärmetauscher(n) und Trägerelementen direkt am Bestimmungsort, beispielsweise im Fahrzeug, befestigt werden kann. Würde die Befestigung nur mittelbar über das Gehäuse erfolgen, könnten beispielsweise Vibrationen dazu führen, dass der Verbund aus Wärmetauscher(n) und Trägerelementen innerhalb des Gehäuses schwingt, was beispielsweise zu störenden Geräuschen oder sich lösenden Verbindungen führen könnte.

### Kurze Beschreibung der Zeichnungen

- Figur 1: zeigt eine perspektivische Darstellung einer Ausführungsform des erfin- dungsgemäßen Kälte- und/oder Wärmespeichers;
- Figur 2: zeigt eine Seitenansicht der bei dem Kälte- und/oder Wärmespeicher ge- mäß Figur 1 verwendeten Anordnung von erstem Wärmetauscher und zweitem Wärmetauscher; und
- Figur 3: zeigt eine perspektivische Ansicht der bei dem Kälte- und/oder Wärmespei- cher gemäß Figur 1 verwendeten Anordnung von erstem Wärmetauscher und zweitem Wärmetauscher.

### Beschreibung einer bevorzugten Ausführungsform

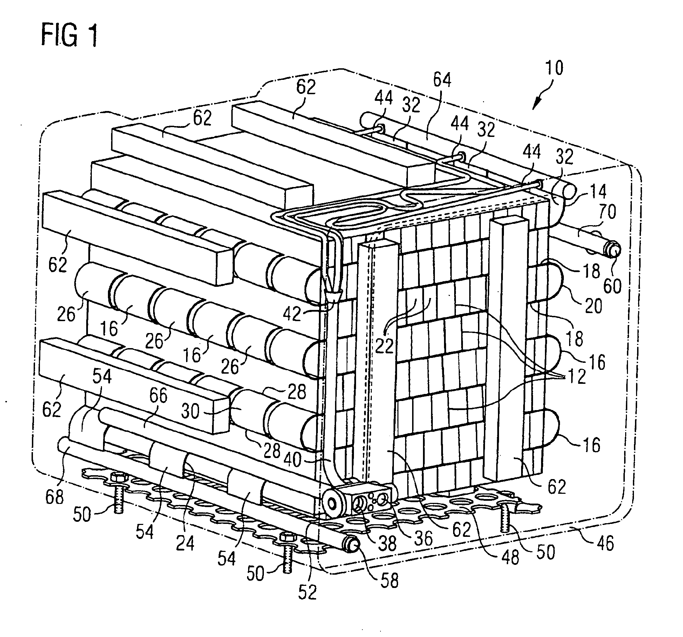

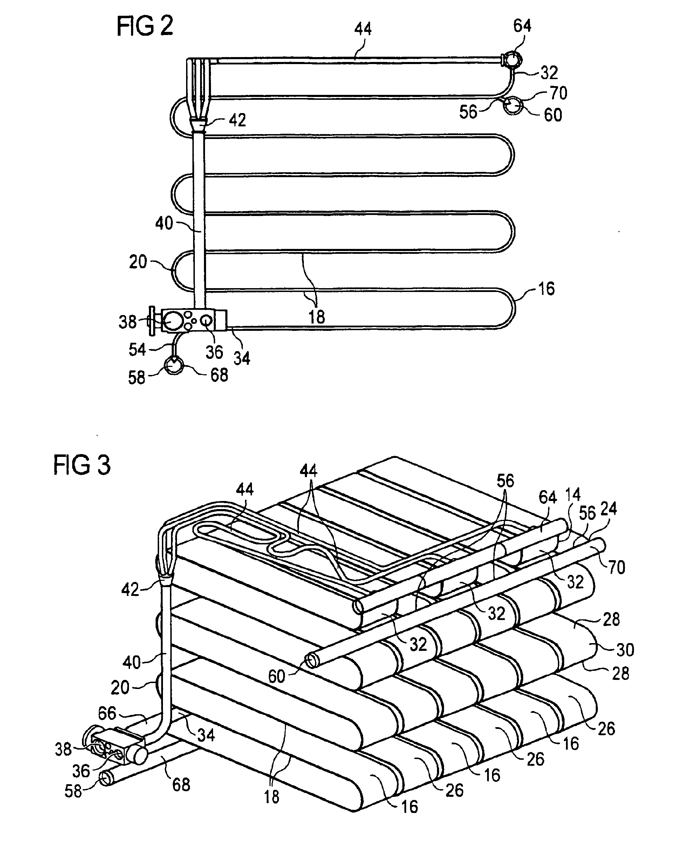

Nachfolgend wird gemeinsam auf die Figuren 1 bis 3 Bezug genommen, wobei darauf hingewiesen wird, dass manche Komponenten beziehungsweise Abschnitte von Komponenten nicht in allen Figuren zu erkennen sind.

Der in Figur 1 dargestellte Kälte- und/oder Wärmespeicher 10 weist ein Gehäuse 46 auf, das lediglich strichpunktiert und durchsichtig dargestellt ist. In dem Gehäuse 46 sind ein erster Wärmetauscher 14 und ein zweiter Wärmetauscher 24 auf einer Trägerplatte 48 angeordnet, die bezogen auf die Darstellung von Figur 1 mit einem Abstand zum Boden des Gehäuses 46 vorgesehen ist. Der erste Wärmetauscher 14 weist im dargestellten Fall drei erste serpentinenförmige Hohlprofile 16 auf, die mit einem derartigen Abstand zueinander nebeneinander angeordnet sind, dass sich zweite serpentinenförmige Hohlprofile 26 des zweiten Wärmetauschers 24 zwischen ihnen erstrecken können. Zwischen den durch jeweils zwei benachbarte erste Schenkel 18 und einen ersten Verbindungsbereich 20 gebildeten ersten Serpentinen und zwischen den jeweils durch zwei benachbarte zweite Schenkel 28 und einem zweiten Verbindungsbereich 30 gebildeten zweiten Serpentinen sind mit einem Kälte- beziehungsweise Wärmespeichermedium beladene Trägerelemente 12 angeordnet. Die Trägerelemente 12 sind durch eine Vielzahl von Trägerelementstreifen 22 gebildet, die sich im Wesentlichen senkrecht zu den ersten Schenkeln 18 und den zweiten Schenkeln 28 erstrecken, und zwar derart, dass die Trägerelementstreifen 22 im Wesentlichen parallel zu den ersten Verbindungsbereichen 20 und den zweiten Verbindungsbereichen 30 ausgerichtet sind. Die ersten Hohlprofile 16 und die zweiten Hohlprofile 26 weisen vorzugsweise federelastische Eigenschaften auf, so dass sich ein kraftschlüssiger Verbund der Trägerelemente 12 und des ersten Wärmetauschers 14 sowie des zweiten Wärmetauschers 24 ergibt, wie dies in der DE 102 420 69 B4 ausführlich beschrieben ist.

Als Trägerelementstreifen 22 kommen insbesondere Graphitstreifen in Betracht, wobei das Wärmespeichermedium vorzugsweise ein Phasenwechselmaterial wie beispielsweise Wasser oder Paraffin ist. Wenn als Trägerelementstreifen 22 Graphitstreifen verwendet werden, lässt sich die Wärmeleitfähigkeit im Vergleich zur Verwendung von Graphitplatten beispielsweise von 5 W/mK auf 30 W/mK erhöhen. Eine bessere Wärmeleitfähigkeit führt zu deutlich kürzeren Ladezeiten des Kälte- und/oder Wärmespeichers 10 und ist daher sehr vorteilhaft.

Die einen Endabschnitte 32 der ersten serpentinenförmigen Hohlprofile 16 stehen über Einzelverbindungsleitungen 44, einen Verteiler 42 und einem gemeinsamen Verbindungsleitungsabschnitt 40 mit einem ersten gemeinsamen Wärmeträgereinlass 36 in Verbindung. Zwischen den einen Endabschnitten 32 der ersten serpentinenförmigen Hohlprofile 16 und den Einzelverbindungsleitungen 44 ist eine Einlassstange 64 vorgesehen, die zur Stabilisierung der Anordnung dient, ohne die einen Endabschnitte 32 der ersten serpentinenförmigen Hohlprofile 16 miteinander zu verbinden. Obwohl die Strecken zwischen dem ersten gemeinsamen Wärmeträgereinlass 36 und den einen Endabschnitten 32 der drei ersten serpentinenförmigen Hohlprofile 16 unterschiedlich lang sind, erfolgt die Verbindung zwischen den einen Endabschnitten 32 und dem ersten gemeinsamen Wärmeträgereinlass 36 über insgesamt gleich lange Verbindungsleitungen. Zu diesem Zweck sind alle Einzelverbindungsleitungen 44 gleich lang, aber unterschiedlich gebogen. Zwischen dem gemeinsamen Verbindungsleitungsabschnitt 40 und den Einzelverbindungsleitungen 44 ist ein Verteiler 42 in Form eines Venturiverteilers vorgesehen. Der Venturiverteiler 42 kann in seinem Inneren eine Drossel in Form einer Engstelle aufweisen, so dass sowohl der vor der Drossel befindliche Querschnitt des gemeinsamen Verbindungsleitungsabschnittes 40 als auch die Summe der Querschnitte der Einzelverbindungsleitungen 44 größer als der Querschnitt der Engstelle sind. Durch die Art des Verteilers 42 und die gleich langen Verbindungsleitungen ergibt sich eine sowohl hinsichtlich der Menge als auch hinsichtlich des Drucks gleichmäßige Beaufschlagung der ersten serpentinenförmigen Hohlprofile 16 mit dem ersten Wärmeträger, der insbesondere durch ein Kältemittel gebildet sein kann. Wenn der erste Wärmeträger dem ersten gemeinsamen Wärmeträgereinlass 36 in Form von komprimiertem Kältemittel zugeführt wird, kann der erste Wärmetauscher 14 zum Beladen des Kälte- und/oder Wärmespeichers 10 mit Kälte als Verdampfer dienen.

Die anderen Endabschnitte 34 der ersten serpentinenförmigen Hohlprofile 16 stehen über ein erstes Auslassrohr 66 mit einem ersten gemeinsamen Wärmeträgerauslass 38 in Verbindung. Der erste gemeinsame Wärmeträgereinlass 36 und der erste gemeinsame Wärmeträgerauslass 38 kommen innerhalb eines Kupplungselementes nebeneinander zu liegen, und zwar im Bereich einer Ecke des quaderförmigen Gehäuses 46. Dabei ist klar, dass der erste gemeinsame Wärmeträgereinlass 36 und der erste gemeinsame Wärmeträgerauslass 38 vorzugsweise von außen zugänglich sind, beispielsweise durch einen geeigneten Durchbruch in Gehäuse 46. Diese Anordnung des ersten gemeinsamen Wärmeträgereinlasses 36 ermöglicht es unter anderem, dass sich der erste gemeinsame Verbindungsleitungsabschnitt 40 parallel zu einer Quaderkante 52, das heißt gerade zu dem Verteiler 42 erstreckt, was ebenfalls zu einer gleichmäßigen Verteilung des ersten Wärmeträgers beiträgt.

Bei der dargestellten Ausführungsform liegen die als Einlass dienenden einen Endabschnitte 32 der ersten serpentinenförmigen Hohlprofile 16 bezogen auf die endgültige Einbaulage des Kälte- und/oder Wärmespeichers 10 höher als die anderen Endabschnitte 34 der ersten serpentinenförmigen Hohlprofile 16. Dadurch wird der erste Wärmetauscher 14 von oben nach unten vom ersten Wärmeträger durchströmt. Insbesondere wenn der erste Wärmeträger ein Kältemittel ist, wird durch diese Lösung vermieden, dass sich Öl im ersten Wärmetauscher 14 sammelt.

Der zweite Wärmeträger 24 ist dazu vorgesehen, von einem zweiten Wärmeträger durchströmt zu werden, bei dem es sich vorzugsweise um Sole handelt. Zu diesem Zweck sind die einen Endabschnitte 54 der zweiten serpentinenförmigen Hohlprofile 26 über ein Einlassrohr 68 mit einem zweiten gemeinsamen Wärmeträgereinlass 58 verbunden. Die anderen Endabschnitte 56 der zweiten serpentinenförmigen Hohlprofile 26 sind über ein zweites Auslassrohr 70 mit einem zweiten gemeinsamen Wärmeträgerauslass 60 verbunden, so dass der zweite Wärmetauscher 24 von unten nach oben durchströmt wird. Wenn der erste Wärmeträger durch Kältemittel und der zweite Wärmeträger durch Sole gebildet ist und das Kältemittel zum Beladen des Kälte- und/oder Wärmespeichers 10 mit Kälte und die Sole zum entladen des Kälte- und/oder Wärmespeichers 10 verwendet wird, wird der Kälte- und/oder Wärmespeicher 10 im Gegenstromverfahren be- und entladen. Dies trägt unter anderem dazu bei, dass zwischen der aktuellen Temperatur des zweiten Wärmeträgers und der aktuellen Temperatur des gerade benachbarten Kälte- beziehungsweise Wärmespeichermediums immer eine möglichst große Differenz besteht.

Obwohl dies nicht dargestellt ist, kann es in einigen Fällen vorteilhaft sein, wenn die für den Wärmetausch wirksame Oberfläche des ersten Wärmetauschers 14 kleiner als die für den Wärmetausch wirksame Oberfläche des zweiten Wärmetauschers 24 ist, beispielsweise in dem weniger erste serpentinenförmige Hohlprofile 16 als zweite serpentinenförmige Hohlprofile 26 vorgesehen werden. Das Ziel dieser Maßnahme besteht darin, die gespeicherte Kälte oder Wärme möglichst schnell an den Ort bringen zu können, an dem sie benötigt wird. Die wirksame Oberfläche des ersten Wärmetauschers 14 wird aus Platzgründen möglichst klein aber doch so groß gewählt, dass beispielsweise eine effiziente und ausreichend schnelle Beladung über Kältemittel möglich ist.

Die als Lochplatte ausgestaltete Trägerplatte 48 weist Befestigungseinrichtungen 50 in Form von vier Schrauben (nur drei dargestellt) auf, die sich aus dem Gehäuse 46 heraus erstrecken. Hintergrund dieser Maßnahme ist, dass Hohlräume innerhalb des Gehäuses 46 vorzugsweise derart mit einem isolierenden Schaum ausgeschäumt werden, dass der gesamte Verbund aus Wärmetauschern 14, 24 und Trägerelementen 12 vollständig von aufgeschäumtem Material umgeben ist. Um dies zu gewährleisten ist die Trägerplatte 48 mit einem entsprechenden Abstand zum Gehäuse 46 angeordnet, beispielsweise mittels geeigneter Abstandelemente wie Muttern oder dergleichen. Die sich aus dem Gehäuse heraus erstreckenden Befestigungselemente 50 gewährleisten, dass der Verbund aus Wärmetauschern 14, 24 und Trägerelementen 12 direkt am Bestimmungsort, beispielsweise im Fahrzeug befestigt werden kann. Würde diese Befestigung nur mittelbar über das Gehäuse 46 erfolgen, könnten beispielsweise Vibrationen dazu führen, dass der Verbund aus Wärmetauschern 14, 24 und Trägerelementen 12 innerhalb des Gehäuses 46 schwingt, was beispielsweise zu störenden Geräuschen und/oder im schlimmsten Fall sich lösenden Verbindungen führen könnte. Insgesamt ergibt die erfindungsgemäße Befestigung des Kälte- und/oder Wärmespeichers 10 mehr Integrationsmöglichkeiten.

Zwischen dem Verbund aus Wärmetauschern 14, 24 sowie den Trägerelementen 12 und dem Gehäuse 46 sind vorzugsweise elastische Abstandshalter 62 vorgesehen, die insbesondere vor dem Ausschäumen der Hohlräume die Lage des Verbundes aus den Wärmetauschern 14, 24 sowie den Trägerelementen 12 bezüglich dem Gehäuse 46 stabilisieren.

Die serpentinenförmigen Hohlprofile 16, 26 des ersten Wärmetauschers 14 und des zweiten Wärmetauschers 24 sind im dargestellten Fall durch Flachrohre gebildet, was bevorzugt ist. Die Höhe der Flachrohre wird dabei vorzugsweise jedoch groß genug gewählt, um die Druckverluste gering zu halten.

Der erfindungsgemäße Kälte- und/oder Wärmespeicher zeichnet sich durch eine gute Wärmeleitung, kurze Ladezeiten, eine hohe Kälte- oder Wärmeleistung, geringe Druckverluste sowie eine bessere Kältemittelverteilung aus.

### Bezugszeichenliste

- 10: Kälte- und/oder Wärmespeicher
- 12: Trägerelemente
- 14: Erster Wärmetauscher
- 16: Erste serpentinenförmige Hohlprofile
- 18: Erste Schenkel
- 20: Erste Verbindungsbereiche
- 22: Trägerelementstreifen
- 24: Zweiter Wärmetauscher
- 26: Zweite serpentinenförmige Hohlprofile
- 28: Zweite Schenkel
- 30: Zweite Verbindungsbereiche
- 32: Einen Endabschnitte der ersten Hohlprofile
- 34: Andere Endabschnitte der ersten Hohlprofile
- 36: Erster gemeinsamer Wärmeträgereinlass
- 38: Erster gemeinsamer Wärmeträgerauslass
- 40: Gemeinsamer Verbindungsleitungsabschnitt
- 42: Verteiler
- 44: Einzelverbindungsleitungen
- 46: Gehäuse
- 48: Trägerplatte
- 50: Befestigungseinrichtungen
- 52: Quaderkante
- 54: Einen Endabschnitte der zweiten Hohlprofile
- 56: Andere Endabschnitte der zweiten Hohlprofile
- 58: Zweiter gemeinsamer Wärmeträgereinlass
- 60: Zweiter gemeinsamer Wärmeträgerauslass
- 62: Abstandhalter
- 64: Einlassstange
- 66: Erstes Auslassrohr
- 68: Einlassrohr
- 70: Zweites Auslassrohr

## Patentansprüche

1. Kälte- und/oder Wärmespeicher (10) mit einem Gehäuse (46), in dem zumindest ein mit einem Kälte- beziehungsweise Wärmespeichermedium beladenes Trägerelement (12) und zumindest ein erster Wärmetauscher (14) angeordnet sind, **dadurch gekennzeichnet, dass** das zumindest eine Trägerelement (12) und der zumindest eine Wärmetauscher (14) auf einer ebenfalls in dem Gehäuse (46) vorgesehenen Trägerplatte (48) angeordnet sind, die sich aus dem Gehäuse (46) heraus erstreckende Befestigungseinrichtungen (50) aufweist.

2. Kälte- und/oder Wärmespeicher (10) nach Anspruch 1, **dadurch gekennzeichnet, dass** die Trägerplatte (48) beabstandet vom Gehäuse (46) angeordnet ist.

3. Kälte- und/oder Wärmespeicher (10) nach Anspruch 1 oder 2, **dadurch gekennzeichnet, dass** zumindest einige Zwischenräume zwischen dem Gehäuse (46) und darin enthaltenen Komponenten ausgeschäumt sind.

4. Kälte- und/oder Wärmespeicher (10) nach einem der Ansprüche 1 bis 3, **dadurch gekennzeichnet, dass** der erste Wärmetauscher (14) dazu vorgesehen ist, von einem ersten Wärmeträger durchströmt zu werden, dass der erste Wärmetauscher (14) zumindest ein erstes serpentinenförmiges Hohlprofil (16) aufweist, wobei zumindest zwischen einigen der jeweils durch zwei benachbarte erste Schenkel (18) und einen ersten Verbindungsbereich (20) gebildeten ersten Serpentinen zumindest ein Trägerelement (12) angeordnet ist, und dass die Trägerelemente (12) durch eine Vielzahl von Trägerelementstreifen (22) gebildet sind, die im Wesentlichen senkrecht zu den ersten Schenkeln (18) ausgerichtet sind.

5. Kälte- und/oder Wärmespeicher (10) nach einem der Ansprüche 1 bis 4, **dadurch gekennzeichnet, dass** der erste Wärmetauscher (14) dazu vorgesehen ist, von einem ersten Wärmeträger durchströmt zu werden, dass der erste Wärmetauscher (14) zumindest zwei nebeneinander angeordnete erste serpentinenförmige Hohlprofile (16) aufweist, von denen jeweils ein Endabschnitt (32) mit einem ersten gemeinsamen Wärmeträgereinlass (36) und der jeweils andere Endabschnitt (34) mit einem ersten gemeinsamen Wärmeträgerauslass (38) in Verbindung steht, und dass die Verbindung zwischen den einen Endabschnitten (32) und dem ersten gemeinsamen Wärmeträgereinlass (36) über im Wesentlichen gleich lange Verbindungsleitungen (40, 42, 44) erfolgt.

6. Kälte- und/oder Wärmespeicher (10) nach einem der Ansprüche 1 bis 5, **dadurch gekennzeichnet, dass** der erste Wärmetauscher (14) dazu vorgesehen ist, von einem ersten Wärmeträger durchströmt zu werden, dass der erste Wärmetauscher (14) zumindest ein erstes serpentinenförmiges Hohlprofil (16) aufweist, von dem ein Endabschnitt (32) mit einem ersten Wärmeträgereinlass (36) und der andere Endabschnitt (34) mit einem ersten Wärmeträgerauslass (38) in Verbindung steht, und dass der eine Endabschnitt (32) des ersten serpentinenförmigen Hohlprofils (16) bezogen auf die vorgesehene Einbaulage höher liegt als der andere Endabschnitt (34) des ersten serpentinenförmigen Hohlprofils (16).

7. Kälte- und/oder Wärmespeicher (10) nach einem der Ansprüche 1 bis 6, **dadurch gekennzeichnet, dass** er einen zweiten Wärmetauscher (24) aufweist, der dazu vorgesehen ist, von einem zweiten Wärmeträger durchströmt zu werden, und dass die für den Wärmetausch wirksame Oberfläche des ersten Wärmetauschers (14) kleiner als die für den Wärmetausch wirksame Oberfläche des zweiten Wärmetauschers (24) ist.

8. Kälte- und/oder Wärmespeicher (10) nach Anspruch 5, **dadurch gekennzeichnet, dass** er eine Mehrzahl von Trägerelementen (12) aufweist und im wesentlichen Quaderförmig ist und dass der erste gemeinsame Wärmeträgereinlass (36) im Bereich einer Kante (52) des Quaders angeordnet ist.

9. Kälte- und/oder Wärmespeicher (10) nach Anspruch 5 oder 8, **dadurch gekennzeichnet, dass** er eine Mehrzahl von Trägerelementen (12) aufweist und die Verbindungsleitungen (40, 42, 44) durch einen gemeinsamen Verbindungsleitungsabschnitt (40), einen Verteiler (42) und Einzelverbindungsleitungen (44) bestehen.

10. Kälte- und/oder Wärmespeicher (10) nach Anspruch 9, **dadurch gekennzeichnet, dass** der gemeinsame Verbindungsleitungsabschnitt (40) bezogen auf die vorgesehene Einbaulage im Wesentlichen vertikal verläuft.

11. Kälte- und/oder Wärmespeicher (10) nach Anspruch 6, **dadurch gekennzeichnet, dass** er eine Mehrzahl von Trägerelementen (12) aufweist und einen zweiten Wärmetauscher (24) aufweist, der dazu vorgesehen ist, von einem zweiten Wärmeträger durchströmt zu werden, und der zumindest ein zweites serpentinenförmiges Hohlprofil (26) aufweist, von dem ein Endabschnitt (54) mit einem zweiten Wärmeträgereinlass (58)und der andere Endabschnitt (56) mit einem zweiten Wärmeträgerauslass (60) in Verbindung steht.

12. Kälte- und/oder Wärmespeicher (10) nach Anspruch 11, **dadurch gekennzeichnet, dass** der eine Endabschnitt (54) des zweiten serpentinenförmigen Hohlprofils (26) bezogen auf die vorgesehen Einbaulage tiefer liegt als der andere Endabschnitt (56) des zweiten serpentinenförmigen Hohlprofils (26).

13. Kälte- und/oder Wärmespeicher (10) nach Anspruch 7, **dadurch gekennzeichnet, dass** er eine Mehrzahl von Trägerelementen (12) aufweist und der erste Wärmetauscher (14) zumindest ein erstes serpentinenförmiges Hohlprofil (16) aufweist, wobei zumindest zwischen einigen der jeweils durch zwei benachbarte erste Schenkel (18) und einen ersten Verbindungsbereich (20) gebildeten ersten Serpentinen zumindest ein Trägerelement (12) angeordnet ist.

14. Kälte- und/oder Wärmespeicher (10) nach Anspruch 13, **dadurch gekennzeichnet, dass** der zweite Wärmetauscher (24) zumindest ein zweites serpentinenförmiges Hohlprofil (26) aufweist, wobei zumindest zwischen einigen der jeweils durch zwei benachbarte zweite Schenkel (28) und einen zweiten Verbindungsbereich (30) gebildeten zweiten Serpentinen zumindest ein Trägerelement (12) angeordnet ist.

15. Kälte- und/oder Wärmespeicher (10) nach Anspruch 14, **dadurch gekennzeichnet, dass** weniger erste serpentinenförmige Hohlprofile (26) als zweite serpentinenförmige Hohlprofile (26) vorgesehen sind.

## Claims

1. Cold and/or heat accumulator (10) with a housing (46) in which at least a carrier element (12) laden with a cold or heat accumulator medium and at least a first heat exchanger (14) are arranged, **characterized in that** the at least one carrier element (12) and the at least one heat exchanger (14) are arranged on a carrier plate (48) which is likewise provided in the housing (46) and which has fastening devices (50) extending out of the housing (46).

2. Cold and/or heat accumulator (10) according to claim 1, **characterized in that** the carrier plate (48) is arranged so as to be spaced apart from the housing (46).

3. Cold and/or heat accumulator (10) according to claim 1 or 2, **characterized in that** at least some interspaces between the housing (46) and components contained therein are filled with foam.

4. Cold and/or heat accumulator (10) according to one of claims 1 to 3, **characterized in that** first heat exchanger (14) is intended to have a first heat transfer medium flowing through it, **in that** the first heat exchanger (14) has at least one first serpentine hollow profile (16), at least one carrier element (12) being arranged at least between some of the first serpentines formed in each case by two adjacent first legs (18) and a first connection region (20), and **in that** the carrier elements (12) are formed by a multiplicity of carrier-element strips (22) which are oriented essentially perpendicularly to the first legs (18).

5. Cold and/or heat accumulator (10) according to one of claims 1 to 4, **characterized in that** the first heat exchanger (14) is intended to have a first heat transfer medium flowing through it, **in that** the first heat exchanger (14) has at least two first serpentine hollow profiles (16) which are arranged next to one another and of which in each case one end portion (32) is connected to a first common heat transfer medium inlet (36) and in each case the other end portion (34) is connected to a first common heat transfer medium outlet (38), and **in that** the connection between the one end portions (32) and the first common heat transfer medium inlet (36) takes place via connecting lines (40, 42, 44) of essentially equal length.

6. Cold and/or heat accumulator (10) according to one of claims 1 to 5, **characterized in that** the first heat exchanger (14) is intended to have a first heat transfer medium flowing through it, **in that** the first heat exchanger (14) has at least a first serpentine hollow profile (16) of which an end portion (32) is connected to a first heat transfer medium inlet (36) and the other end portion (34), is connected to a first heat transfer medium inlet (38), and **in that** the one end portion (32) of the first serpentine hollow profile (16) lies at a higher level than the other end portion (34) of the first serpentine hollow profile (16) with respect to the intended installation position.

7. Cold and/or heat accumulator (10) according to one of claims 1 to 6, **characterized in that** it has a second heat exchanger (24) which is intended to have a second heat transfer medium flowing through it and **in that** the surface, active for heat exchange, of the first heat exchanger (14) is smaller than the surface, active for heat exchange, of the second heat exchanger (24).

8. Cold and/or heat accumulator (10) according to claim 5, **characterized in that** it has a plurality of carrier elements (12) and is essentially parallelepipedal, and **in that** the first common heat transfer medium inlet (36) is arranged in the region of one edge (52) of the parallelepiped.

9. Cold and/or heat accumulator (10) according to claim 5 or 8, **characterized in that** it has a plurality of carrier elements (12) and the connecting lines (40, 42, 44) consist of a common connecting-line portion (40), a distributor (42) and individual connecting lines (44).

10. Cold and/or heat accumulator (10) according to claim 9, **characterized in that** the common connecting-line portion (40) runs essentially vertically with respect to the intended installation position.

11. Cold and/or heat accumulator (10) according to claim 6, **characterized in that** it has a plurality of carrier elements (12) and has a second heat exchanger (24) which is intended to have a second heat transfer medium flowing through it and which has at least a second serpentine hollow profile (26), of which one end portion (54) is connected to a second heat transfer medium inlet (58) and the other end portion (56) is connected to a second heat transfer medium outlet (60).

12. Cold and/or heat accumulator (10) according to claim 11, **characterized in that** the one end portion (54) of the second serpentine hollow profile (26) lies at a lower level than the other end portion (56) of the second serpentine hollow profile (26) with respect to the intended installation position.

13. Cold and/or heat accumulator (10) according to claim 7, **characterized in that** it has a plurality of carrier elements (12), and the first heat exchanger (14) has at least one first serpentine hollow profile (16), at least one carrier element (12) being arranged at least between some of the first serpentines formed in each case by two adjacent first legs (18) and by a first connection region (20).

14. Cold and/or heat accumulator (10) according to claim 13, **characterized in that** the second heat exchanger (24) has at least one second serpentine hollow profile (26), at least one carrier element (12) being arranged at least between some of the second serpentines formed in each case by two adjacent second legs (28) and by a second connection region (30).

15. Cold and/or heat accumulator (10) according to claim 14, **characterized in that** fewer first serpentine hollow profiles (26) are provided than second serpentine hollow profiles (26).

## Revendications

1. Accumulateur de froid et/ou de chaleur (10) avec une enceinte (46), dans laquelle au moins un élément porteur (12) chargé d'un fluide d'accumulation de froid et/ou de chaleur et au moins un premier échangeur de chaleur (14) sont disposés, **caractérisé en ce que** ledit au moins un élément porteur (12) et ledit au moins un échangeur de chaleur (14) sont disposés sur une plaque de support (48) également prévue dans l'enceinte (46), qui présente des dispositifs de fixation (50) s'étendant hors de l'enceinte (46).

2. Accumulateur de froid et/ou de chaleur (10) selon la revendication 1, **caractérisé en ce que** la plaque de support (48) est disposée à distance de l'enceinte (46).

3. Accumulateur de froid et/ou de chaleur (10) selon la revendication 1 ou 2, **caractérisé en ce qu'**au moins quelques espaces intermédiaires entre l'enceinte (46) et des composants contenus dans celle-ci sont remplis de mousse.

4. Accumulateur de froid et/ou de chaleur (10) selon l'une quelconque des revendications 1 à 3, **caractérisé en ce que** le premier échangeur de chaleur (14) est prévu pour être parcouru par un premier porteur de chaleur, **en ce que** le premier échangeur de chaleur (14) présente au moins un premier profilé creux en forme de serpentin (16), dans lequel au moins un élément porteur (12) est disposé entre certains des premiers serpentins formés respectivement par deux premières branches voisines (18) et une première région de liaison (20), et **en ce que** les éléments porteurs (12) sont formés par une pluralité de bandes d'éléments porteurs (22), qui sont orientées sensiblement perpendiculairement aux premières branches (18).

5. Accumulateur de froid et/ou de chaleur (10) selon l'une quelconque des revendications 1 à 4, **caractérisé en ce que** le premier échangeur de chaleur (14) est prévu pour être parcouru par un premier porteur de chaleur, **en ce que** le premier échangeur de chaleur (14) présente au moins deux premiers profilés creux (16) en forme de serpentins disposés l'un à côté de l'autre, dont chaque fois une première partie d'extrémité (32) est en communication avec une première entrée de porteur de chaleur commune (36) et chaque fois l'autre partie d'extrémité (34) est en communication avec une première sortie de porteur de chaleur commune (38), et **en ce que** les liaisons entre les premières parties d'extrémité (32) et la première entrée de porteur de chaleur commune (36) est réalisée au moyen de conduites de liaison (40, 42, 44) de longueur essentiellement égale.

6. Accumulateur de froid et/ou de chaleur (10) selon l'une quelconque des revendications 1 à 5, **caractérisé en ce que** le premier échangeur de chaleur (14) est prévu pour être parcouru par un premier porteur de chaleur, **en ce que** le premier échangeur de chaleur (14) présente au moins un premier profilé creux en forme de serpentin (16), dont une partie d'extrémité (32) est en communication avec une première entrée de porteur de chaleur (36) et l'autre partie d'extrémité (34) est en communication avec une première sortie de porteur de chaleur (38), et **en ce que** la première partie d'extrémité (32) du premier profilé creux en forme de serpentin (16) se trouve plus haut, par rapport à la position de montage prévue, que l'autre partie d'extrémité (34) du premier profilé creux en forme de serpentin (16).

7. Accumulateur de froid et/ou de chaleur (10) selon l'une quelconque des revendications 1 à 6, **caractérisé en ce qu'**il présente un deuxième échangeur de chaleur (24), qui est prévu pour être parcouru par un deuxième porteur de chaleur, et **en ce que** la surface utile pour l'échange de chaleur du premier échangeur de chaleur (14) est plus petite que la surface utile pour l'échange de chaleur du deuxième échangeur de chaleur (24).

8. Accumulateur de froid et/ou de chaleur (10) selon la revendication 5, **caractérisé en ce qu'**il présente une pluralité d'éléments porteurs (12) et il est essentiellement parallélépipédique et **en ce que** la première entrée de porteur de chaleur commune (36) est disposée dans la région d'une arête (52) du parallélépipède.

9. Accumulateur de froid et/ou de chaleur (10) selon la revendication 5 ou 8, **caractérisé en ce qu'**il présente une pluralité d'éléments porteurs (12) et les conduites de liaison (40, 42, 44) sont composées d'une partie de conduite de liaison commune (40), d'un répartiteur (42) et de conduites de liaison individuelles (44).

10. Accumulateur de froid et/ou de chaleur (10) selon la revendication 9, **caractérisé en ce que** la partie de conduite de liaison commune (40) s'étend en direction essentiellement verticale par rapport à la position de montage prévue.

11. Accumulateur de froid et/ou de chaleur (10) selon la revendication 6, **caractérisé en ce qu'**il présente une pluralité d'éléments porteurs (12) et un deuxième échangeur de chaleur (24), qui est prévu pour être parcouru par un deuxième porteur de chaleur, et qui présente au moins un deuxième profilé creux en forme de serpentin (26), dont une partie d'extrémité (54) est en communication avec une deuxième entrée de porteur de chaleur (58) et l'autre partie d'extrémité (56) est en communication avec une deuxième sortie de porteur de chaleur (60).

12. Accumulateur de froid et/ou de chaleur (10) selon la revendication 11, **caractérisé en ce que** la première partie d'extrémité (54) du deuxième profilé creux en forme de serpentin (26) se trouve plus bas, par rapport à la position de montage prévue, que l'autre partie d'extrémité (56) du deuxième profilé creux en forme de serpentin (26).

13. Accumulateur de froid et/ou de chaleur (10) selon la revendication 7, **caractérisé en ce qu'**il présente une pluralité d'éléments porteurs (12) et le premier échangeur de chaleur (14) présente au moins un premier profilé creux en forme de serpentin (16), dans lequel au moins un élément porteur (12) est disposé entre certains des premiers serpentins formés respectivement par deux premières branches voisines (18) et une première région de liaison (20).

14. Accumulateur de froid et/ou de chaleur (10) selon la revendication 13, **caractérisé en ce que** le deuxième échangeur de chaleur (24) présente au moins un deuxième profilé creux en forme de serpentin (26), dans lequel au moins un élément porteur (12) est disposé entre certains des deuxièmes serpentins formés respectivement par deux deuxièmes branches voisines (28) et une deuxième région de liaison (30).

15. Accumulateur de froid et/ou de chaleur (10) selon la revendication 14, **caractérisé en ce qu'**il est prévu moins de premiers profilés creux en forme de serpentins (26) que de deuxièmes profilés creux en forme de serpentins (26).
